# FASCICULE DE BREVET EUROPEEN

(11) **EP 2 303 959 B1**
(45) Date de publication et mention de la délivrance du brevet: **03.04.2013**
(21) Numéro de dépôt: 09736441.8
(22) Date de dépôt: 16.07.2009
(51) Int. Cl.: C08J 3/24, C08J 5/18, C08K 5/14

(54) **MELANGE DE PEROXYDES POUR LA RETICULATION D'ELASTOMERES**
MISCHUNG VON PEROXIDEN ZUR VERNETZUNG VON ELASTOMEREN
MIXTURE OF PEROXIDES FOR CROSSLINKING ELASTOMERS

(30) Priorité: 18.07.2008 FR 0804112
(43) Date de publication de la demande: 06.04.2011
(73) Titulaire: Arkema France, 92700 Colombes (FR)
(72) Inventeur: KEROMNES, Laurent, F-69520 Grigny (FR)
(86) Numéro de dépôt international: PCT/FR2009/051405
(87) Numéro de publication internationale: WO 2010/007315

(56) Documents cités:
- EP-A- 1 251 143
- US-A- 5 447 576

## Description

La présente invention porte sur un mélange de peroxydes, en particulier utile pour la réticulation de copolymères d'éthylène-acétate de vinyle (EVA). La présente invention porte également sur une composition réticulable comprenant un copolymère d'éthylène-acétate de vinyle et un tel mélange de peroxydes. La présente invention porte encore sur un procédé de réticulation de copolymères d'éthylène-acétate de vinyle (EVA).

Il est connu de réticuler les copolymères éthylène-acétate de vinyle (EVA) en mettant ces derniers en présence de peroxydes initiateurs de radicaux libres tels que le OO-tert-butyl-O-(2-éthylhexyl) monoperoxycarbonate.

Toutefois, les temps de réticulation obtenus par de tels procédés sont longs. II s'ensuit une perte de productivité pour les industries transformant ces élastomères en produits finis.

Par ailleurs, il est important, lors d'un procédé de réticulation d'un copolymère éthylène-acétate de vinyle (EVA) de conserver une bonne densité de réticulation. En effet, la densité de réticulation est une indication des propriétés mécaniques du produit fini. Ainsi, si la densité de réticulation est trop faible, le produit fini peut être caractérisé par une résistance à la rupture et une résistance à la déchirure trop faibles.

Il subsiste donc le besoin de disposer d'un mélange d'aide à la réticulation pour des compositions réticulables de polymères élastomères tels que des copolymères éthylène-acétate de vinyle (EVA), en particulier en vue de fabriquer de façon rapide des produits finis à base d'élastomères de copolymère éthylène-acétate de vinyle (EVA), tout en conservant une bonne densité de réticulation. Il subsiste également le besoin d'un procédé de réticulation de telles compositions réticulables qui présenterait une vitesse de réaction améliorée tout en conservant une bonne densité de réticulation.

La demanderesse a maintenant découvert de façon surprenante qu'en utilisant un mélange particulier de peroxydes, avec une teneur particulière pour au moins un de ces peroxydes, il était possible de réticuler des copolymères éthylène-acétate de vinyle (EVA) rapidement tout en conservant une bonne densité de réticulation.

La présente invention porte sur un mélange, notamment d'aide à la réticulation de copolymères éthylène-acétate de vinyle (EVA), comprenant un mélange de peroxydes particulier, l'un de ces peroxydes étant en proportion minoritaire par rapport à l'autre peroxyde. Ainsi, un premier aspect de l'invention porte sur un mélange comprenant au moins du OO-tert-butyl-O-(2-éthylhexyl) monoperoxycarbonate et au moins du OO-tert-amyl-O-2-éthyl hexyl monoperoxycarbonate, caractérisé en ce que ledit OO-tert-amyl-O-2-éthyl hexyl monoperoxycarbonate est présent dans le mélange à une teneur allant de 0,001 à 45% en poids, par rapport au poids total du mélange.

L'association des deux peroxydes OO-tert-butyl-O-(2-éthylhexyl) monoperoxycarbonate et OO-tert-amyl-O-2-éthyl hexyl monoperoxycarbonate, avec une teneur particulière allant de 0,001 à 45%, en poids, par rapport au poids du mélange pour le OO-tert-amyl-O-2-éthyl hexyl monoperoxycarbonate, dans les mélanges de l'invention permet d'augmenter la vitesse de réaction lorsque la réticulation du copolymère éthylène-acétate de vinyle (EVA) est effectuée en présence du mélange selon l'invention, en particulier par rapport à un procédé de réticulation dans lequel seul du OO-tert-butyl-O-(2-éthylhexyl) monoperoxycarbonate est utilisé.

Un autre aspect de la présente invention porte sur une composition réticulable comprenant au moins un copolymère éthylène-acétate de vinyle (EVA) et un mélange tel que défini ci-dessus.

La présente invention porte encore sur un procédé de réticulation d'une composition comprenant au moins un copolymère éthylène-acétate de vinyle, comprenant au moins l'étape de faire réagir ledit copolymère éthylène-acétate de vinyle avec un mélange tel que défini ci-dessus.

Le procédé selon l'invention permet d'obtenir une vitesse de réaction plus élevée, et donc une réticulation plus rapide des copolymères ethylène-acétate de vinyle, tout en conservant une bonne densité de réticulation. Ainsi, les produits finis, à base de copolymères ethylène-acétate de vinyle, réticulés selon le procédé selon l'invention présentent une contrainte à la rupture et un module élevés.

Ainsi, un autre aspect de la présente invention porte sur l'utilisation d'un mélange tel que défini ci-dessus pour augmenter la vitesse de réticulation dans un procédé de réticulation de copolymère d'éthylène-acétate de vinyle.

Un autre aspect de la présente invention porte sur un procédé de fabrication d'un film caractérisé en ce qu'il comprend au moins les étapes suivantes :
- a°) extrusion sous forme de film d'une composition réticulable telle que définie ci-dessus,
- b°) réticulation de ladite composition réticulable pendant ou après ladite étape a°) d'extrusion.

Le mélange selon l'invention comprend au moins du OO-tert-butyl-O-(2-éthylhexyl) monoperoxycarbonate (TBEC). Ce composé est disponible commercialement sous la marque « Luperox® TBEC » auprès de la société ARKEMA.

Le mélange selon l'invention comprend en outre OO-du tert-amyl-O-2-éthyl hexyl monoperoxycarbonate (TAEC). Ce composé est disponible commercialement sous la marque « Luperox® TAEC » auprès de la société ARKEMA.

Le OO-tert-amyl-O2-éthyl hexyl monoperoxycarbonate (TAEC) est présent dans mélange selon l'invention à une teneur allant de 0,001 à 45% en poids, par rapport au poids du mélange. Une telle teneur permet d'augmenter de façon significative la vitesse de réaction de réticulation d'un copolymère éthylène-acétate de vinyle (EVA), par rapport à l'utilisation de OO-tert-butyl-O-(2-éthylhexyl) monoperoxycarbonate (TBEC) seul, et ce tout en conservant une bonne densité de réticulation.

De préférence, la teneur en OO-tert-amyl-O-2-éthyl hexyl monoperoxycarbonate (TAEC) dans le mélange selon l'invention va de 10 à 35%, et de préférence encore de 15 à 30%, en poids, par rapport au poids total du mélange.

Dans une forme de réalisation de l'invention, ledit mélange consiste en ledit OO-tert-butyl-O-(2-éthylhexyl) monoperoxycarbonate et ledit OO-tert-amyl-O-2-éthyl hexyl monoperoxycarbonate.

La présente invention porte aussi sur une composition réticulable comprenant au moins un copolymère éthylène-acétate de vinyle (EVA) et un mélange tel que défini ci-dessus.

Dans une forme de réalisation de l'invention, ledit copolymère éthylène-acétate de vinyle (EVA) est présent dans ladite composition à une teneur allant de 85 à 99,5%, de préférence de 97 à 99% en poids, par rapport au poids de la composition.

Dans une forme de réalisation de l'invention, ledit mélange est présent dans ladite composition à une teneur allant de 0,5 à 5%, de préférence de 1 à 3%, en poids, par rapport au poids de la composition.

Des copolymères éthylène-acétate de vinyle (EVA) convenant à la présente invention sont par exemple les copolymères ethylène-acétate de vinyle vendus respectivement sous les dénominations commerciales « Evatane® 18-150 » ou « Evatane® 40-55 » par la société ARKEMA. La teneur en acétate de vinyle des copolymères éthylène-acétate de vinyle convenant à la présente invention peut varier : par exemple, ces copolymères peuvent être à basse teneur en acétate de vinyle ou à haute teneur en acétate de vinyle.

Dans une forme de réalisation de l'invention, ladite composition réticulable comprend en outre au moins un agent anti-oxydant. Par exemple, l'agent anti-oxydant est présent dans ladite composition à une teneur allant de 0,1 à 3%, en poids, par rapport au poids de la composition.

L'agent anti-oxydant peut par exemple être la (1,2 - dihydro-2,2,4-trimethylquinoline) (TMQ).

Selon le procédé selon l'invention, on fait réagir au moins un copolymère éthylène-acétate de vinyle (EVA) avec le mélange défini ci-dessus, par exemple au sein de la composition réticulable définie ci-dessus.

Le procédé selon l'invention permet de fabriquer des produits finis avec une vitesse de réticulation augmentée. Ainsi, le procédé selon l'invention permet un gain de productivité pour le fabriquant de produits finis. Grâce au procédé selon l'invention, il est possible de réticuler des films à base de copolymères d'éthylène-acétate de vinyle avec une productivité accrue, en conservant pour ces films de bonnes propriétés mécaniques du fait d'une bonne densité de réticulation.

Les exemples qui suivent illustrent l'invention.

### EXEMPLES :

Dans les exemples suivants :
Luperox® TBEC signifie : OO-tert-butyl-O-(2-éthylhexyl) monoperoxycarbonate
Luperox® TAEC signifie : OO-tert-amyl-O-2-éthyl hexyl monoperoxycarbonate
EVATANE^{®} 18-150: EVA avec 18% de Vinyl Acetate et 150 comme valeur de Melt Flow Index (MFI) mesuré selon la norme ASTM 1238.
EVATANE^{®} 40-55 : EVA avec 40% de Vinyl Acetate et 55 comme valeur de Melt Flow Index (MFI) mesuré selon la norme ASTM 1238.
TMQ : anti-oxydant (1,2 -dihydro-2,2,4-trimethylquinoline)

### EXEMPLE 1 :

### Préparation d'un composé EVA à basse teneur en Acétate de vinyle :

On pèse les quantités de produits indiqués dans le tableau I suivant

**Tableau 1 : Composition du composé EVA basse teneur en Acétate de Vinyle**

| *Produits* | Concentration (phr) | Pour un batch (g) |
|---|---|---|
| *EVATANE*^{®} *18-150* | 100 | 300 |
| TMQ | 1 | 3 |

On utilise un mélangeur Brabender « 350S » (EUVR184) avec les paramètres suivants:
- consigne température du bain = 70°C
- consigne vitesse de rotation des rotors = 50 rpm.
- on ajoute l'EVATANE^{®} 18-150 (préalablement préchauffé à 80°C pendant une heure)
- après une minute de mélangeage, on ajoute le TMQ.
- la tombée physique du mélange dans le récipient avant calandrage se fait entre 300 et 360 secondes, à température finale ne dépassant pas 90°C pour éviter de trop dégrader le polymère.

Après mélangeage : calandrage 4 fois à épaisseur fine (entre 0,5 et 1 mm), puis 5 fois à épaisseur 2 mm pour obtenir un film mince prêt à être réticulé sous presse à haute température.

On obtient un composé EVA à basse teneur en acétate de vinyle.

On a ensuite préparé les mélanges suivants (les proportions dans chaque mélange sont données en pourcentage en poids, par rapport au poids du mélange) :
- Mélange A (comparatif) : 100% Luperox® TBEC
- Mélange B (invention) : 85% Luperox® TBEC + 15% Luperox® TAEC
- Mélange C (comparatif) : 50% Luperox® TBEC + 50% Luperox® TAEC
- Mélange D (comparatif) : 15% Luperox® TBEC + 85% Luperox® TAEC

### Comparaison des propriétés rhéométriques des compositions élastomères en fonction du mélange utilisé :

On pèse 248 g de composé EVA basse teneur obtenu à l'Exemple 1.

Utilisation du mélangeur Brabender « 350S » (EUVR184) avec les paramètres suivants:
- consigne température du bain = 70°C
- consigne vitesse de rotation des rotors = 50 rpm.
- pression 6 bars
- ajout des produits après 60 secondes de mélange pour une température d'incorporation d'environ 65°C
- la tombée physique du compound à la température finale de 70°C se fait vers 150 s

Après mélangeage : calandrage 4 fois à épaisseur fine (entre 0.5 et 1 mm), puis 5 fois à épaisseur 2 mm.

Des mesures comparatives au rhéomètre RPA à 140°C ont été réalisées juste après mélangeage. Ces mesures ont été réalisées en suivant la norme ASTM D5289A.

On a mesuré M_{H}-M_{L} (voir définition ci-dessous) pour les quatre compositions élastomériques suivantes (les proportions dans chaque composition sont données en pourcentage en poids, par rapport au poids de la composition) :
Composition A (comparative) : 1,5% mélange A + 98,5% composé EVA basse teneur de l'exemple 1
Composition B (invention): 1,5% mélange B + 98,5% composé EVA basse teneur de l'exemple 1
Composition C (comparative) : 1,5% mélange C + 98,5% composé EVA basse teneur de l'exemple 1
Composition D (comparative) : 1,5% mélange D + 98,5% composé EVA basse teneur de l'exemple 1

Les résultats sont rassemblés dans le tableau Il suivant :

**Tableau II : Mesure de M_{H}-M_{L}**

| RPA 2000 à 150°C | Composition A | Composition B | Composition C | Composition D |
|---|---|---|---|---|
| M_{H}-M_{L} (dNm) | 15,4 | 15,3 | 14,3 | 11,6 |

| | | | | |
|---|---|---|---|---|
| RPA : rhéomètre de la société ALPHA TECHNOLOGIES M_{H}-M_{L}: Couple maximum - Couple minimum (en dN.m) | | | | |

Une M_{H}-M_{L} inférieure à 15 ne permet pas d'obtenir une bonne densité de réticulation du produit fini : cette densité trop faible va générer une résistance à la rupture trop faible et un allongement trop élevé, synonyme de déformation trop grande pour la pièce réticulée.

Ainsi, lorsque le mélange de peroxydes utilisé comprend par exemple 50% ou encore 85% de Luperox® TAEC, le produit fini présente les inconvénients suivants : contrainte à la rupture et résistance au déchirement trop faibles.

On a ensuite mesuré t90, t2, Speed S' maxi, selon les définitions suivantes, pour les compositions A et B :
T₉₀: temps de reticulation ou temps nécessaire pour atteindre 90% de la valeur M_{H}-M_{L} (en minutes)
Tₛ₂: temps de grillage ou instant quand la valeur M_{L} + 2 (couple minimum + 2) est atteinte (en minutes)
Speed S' maxi: vitesse de réticulation (en dNm/min)

Le t90 et la Speed S' maxi sont directement liés à la productivité puisqu'une valeur de t90 faible signifie que la réticulation est rapide, tout comme la Speed S' maxi élevée signifie une réticulation rapide. Les résultats sont rassemblés dans le tableau III suivant :

**Tableau III :**

| RPA 2000 à 150°C | Composition A (comparative) | Composition B (invention) |
|---|---|---|
| t₉₀ (min :ss) | 9:30 | 8 :58 |
| tₛ₂ (min :ss) | 01 :33 | 01 :28 |
| Speed S' maxi (dNm/min) | 3,73 | 3,85 |

Ainsi, avec la composition B selon l'invention, comprenant le mélange de peroxydes selon l'invention, on obtient un gain de t90 d'environ 6%. Le ts2 est également réduit de 5 secondes, ce qui signifie que l'extrusion du film ne peut pas être accélérée sous peine de risque de grillage dans l'extrudeuse. La valeur Speed S' maxi est augmentée, la conséquence est une vitesse de réticulation accrue sous la presse et donc une meilleure productivité.

Ainsi, la composition selon l'invention permet un gain de productivité par rapport aux compositions de l'art antérieur.

On a ensuite comparé les propriétés mécaniques de produits finis tels que des plaques (plaque A (comparative) et plaque B (invention)), obtenues avec la composition comparative A et la composition selon l'invention B.

Chaque plaque a été vulcanisée 30 minutes à 140°C.

Les mesures sont réalisées sur les plaques réticulées à l'aide d'un dynamomètre Instron (vitesse 500 mm/min/ éprouvette H2)

Ces mesures sont réalisées en suivant la norme ASTM D412.

On a mesuré les modules respectivement à 50%, à 100%, à 200% et à 300% pour les plaques A et B. Les résultats sont rassemblés dans le tableau IV suivant (les écarts-type sont indiqués entre parenthèses) :

**Tableau IV :**

| Module | Module à 50% (MPa) | Module à 100% (MPa) | Module à 200% (MPa) | Module à 300% (MPa) |
|---|---|---|---|---|
| Plaque A | 1,3 (0,1) | 1,4 (0,1) | 2,2 (0,1) | 2,3 (0,1) |
| Plaque B | 1,6 (0,3) | 1,7 (0,3) | 2,3 (0,2) | 2,5 (0,3) |

Les modules obtenus avec la plaque réalisée à partir de la composition selon l'invention (plaque B) sont meilleurs que ceux obtenus avec la plaque réalisée avec la composition selon l'art antérieur (plaque A). De plus hauts modules signifient qu'il est plus difficile de déformer ces plaques réticulées et que donc celles-ci se caractérisent par une plus grande stabilité dimensionnelle.

### EXEMPLE 2 :

### Préparation d'un composé EVA à haute teneur en Acétate de vinyle :

On pèse les quantités de produits indiqués dans le tableau V suivant :

**Tableau V : Composition du composé EVA haute teneur en Acétate de Vinyle**

| *Produits* | Concentration (phr) | Pour un batch (g) |
|---|---|---|
| *EVATANE*^{®}*40-55* | 100 | 300 |
| TMQ | 1 | 3 |

On utilise un mélangeur Brabender « 350S » (EUVR184) avec les paramètres suivants:
- consigne température du bain = 50°C
- consigne vitesse de rotation des rotors = 50 rpm.
- on ajoute l'EVATANE^{®} 40-55 (préalablement préchauffé à 80°C pendant une heure)
- après une minute de mélangeage, on ajoute le TMQ.
- la tombée physique du produit se fait entre 300 et 360 secondes, à température finale ne dépassant pas 90°C pour éviter de trop dégrader le polymère.

Après mélangeage : calandrage 4 fois à épaisseur fine (entre 0.5 et 1 mm), puis 5 fois à épaisseur 2 mm pour obtenir un film mince prêt à être réticulé sous presse à haute température.

On obtient un composé EVA à haute teneur en acétate de vinyle.

On a préparé les mélanges suivants, identiques à ceux utilisés dans l'exemple 1 (les proportions dans chaque mélange sont données en pourcentage en poids, par rapport au poids du mélange) :
- Mélange A (comparatif) : 100% Luperox® TBEC
- Mélange B (invention) : 85% Luperox® TBEC + 15% Luperox® TAEC
- Mélange C (comparatif) : 50% Luperox® TBEC + 50% Luperox® TAEC
- Mélange D (comparatif) : 15% Luperox® TBEC + 85% Luperox® TAEC

### Comparaison des propriétés rhéométriques des compositions élastomères en fonction du mélange utilisé :

On pèse 248 g de composé EVA haute teneur obtenu à l'Exemple 2.

Utilisation du mélangeur Brabender « 350S » (EUVR184) avec les paramètres suivants:
- consigne température du bain = 50°C
- consigne vitesse de rotation des rotors = 50 rpm.
- pression 6 bars
- ajout des produits après 60 secondes de mélange à une température d'incorporation d'environ 65°C
- la tombée du compound se fait à la température finale de 70°C vers 150 s

Après mélangeage : calandrage 4 fois à épaisseur fine (entre 0.5 et 1 mm), puis 5 fois à épaisseur 2 mm.

Des mesures comparatives au rhéomètre RPA (de la société Alpha Technologies) à 140°C ont été réalisées juste après mélangeage. Ces mesures ont été réalisées en suivant la norme ASTM D5289A.

On a mesuré M_{H}-M_{L} pour les quatre compositions élastomériques suivantes (les proportions dans chaque composition sont données en pourcentage en poids, par rapport au poids de la composition) :
Composition A1 (comparative) : 1,5% mélange A + 98,5% composé EVA haute teneur de l'exemple 2
Composition B1 (invention) : 1,5% mélange B + 98,5% composé EVA haute teneur de l'exemple 2
Composition C1 (comparative): 1,5% mélange C + 98,5% composé EVA haute teneur de l'exemple 2
Composition D1 (comparative) : 1,5% mélange D + 98,5% composé EVA haute teneur de l'exemple 2

Les résultats sont rassemblés dans le tableau VI suivant :

**Tableau VI : Mesure de M_{H}-M_{L}**

| RPA 2000 à 140°C | Composition A1 | Composition B1 | Composition C1 | Composition D1 |
|---|---|---|---|---|
| M_{H}-M_{L} (dNm) | 26,5 | 25,4 | 22,6 | 20,1 |

Une M_{H}-M_{L} inférieure à 25 ne permet pas d'obtenir une bonne densité de réticulation du produit fini : cette densité trop faible va générer une résistance à la rupture trop faible et un allongement trop élevé, synonyme de déformation trop grande pour la pièce réticulée.

Ainsi, lorsque le mélange de peroxydes utilisé comprend par exemple 50% ou encore 85% de TAEC, le produit fini présente les inconvénients suivants : contrainte à la rupture et résistance au déchirement trop faibles.

On a ensuite mesuré t90, t2, Speed S' maxi pour les compositions A1 et B1. Le t90 et la Speed S' maxi sont directement liés à la productivité puisqu'une valeur de t90 faible signifie que la réticulation est rapide, tout comme la Speed S' maxi élevée signifie une réticulation rapide. Les résultats sont rassemblés dans le tableau VII suivant :

**Tableau VII :**

| RPA 2000 à 140°C | Composition A1 (comparative) | Composition B1 (invention) |
|---|---|---|
| t₉₀ (min :ss) | 8 :12 | 7:39 |
| tₛ₂ (min :ss) | 00:45 | 00:42 |
| Speed S' maxi (dNm/min) | 10,20 | 11,90 |

Ainsi, avec la composition B1 selon l'invention, comprenant le mélange de peroxydes selon l'invention, on obtient un gain de t90 d'environ 7%. Le ts2 est également réduit de 3 secondes, ce qui signifie que l'extrusion du film ne peut pas être accélérée sous peine de risque de grillage dans l'extrudeuse. La valeur Speed S' maxi est augmentée, la conséquence est une vitesse de réticulation accrue sous la presse et donc une meilleure productivité.

Ainsi, la composition selon l'invention permet un gain de productivité par rapport aux compositions de l'art antérieur.

On a ensuite comparé les propriétés mécaniques de produits finis tels que des plaques (plaque A1 (comparative) et plaque B1 (invention)) obtenues avec la composition comparative A1 et la composition selon l'invention B1.

Chaque plaque a été vulcanisée 30 minutes à 140°C.

Les mesures sont réalisées sur les plaques réticulées à l'aide d'un dynamomètre Instron (vitesse 500 mm/min/ éprouvette H2).

Ces mesures sont réalisées en suivant la norme ASTM D412.

On a mesuré les modules respectivement à 50%, à 100%, à 200% et à 300% pour les plaques A1 et B1. Les résultats sont rassemblés dans le tableau VIII suivant (les écarts-type sont indiqués entre parenthèses) :

**Tableau VIII :**

| Module | Module à 50% (MPa) | Module à 100% (MPa) | Module à 200% (MPa) | Module à 300% (MPa) |
|---|---|---|---|---|
| Plaque A1 | 2,3 (0,1) | 2,5 (0,1) | 3,1 (0,1) | 3,3 (0,1) |
| Plaque B1 | 3,6 (0,5) | 4,0 (0,5) | 4,7 (0,5) | 4,9 (0,5) |

Les modules obtenus avec la plaque réalisée à partir de la composition selon l'invention (plaque B1) sont meilleurs que ceux obtenus avec la plaque réalisée avec la composition selon l'art antérieur (plaque A1). De plus hauts modules signifient qu'il est plus difficile de déformer ces plaques réticulées et que donc celles-ci se caractérisent par une plus grande stabilité dimensionnelle.

## Revendications

1. Mélange comprenant au moins du OO-tert-butyl-O-(2-éthylhexyl) monoperoxycarbonate et au moins du OO-tert-amyl-O-2-éthyl hexyl monoperoxycarbonate, **caractérisé en ce que** ledit OO-tert-amyl-O-2-éthyl hexyl monoperoxycarbonate est présent dans le mélange à une teneur allant de 0,001 à 45% en poids, par rapport au poids total du mélange.

2. Mélange selon la revendication 1, **caractérisé en ce que** ladite teneur va de 10 à 35%, de préférence de 15 à 30%, en poids, par rapport au poids total du mélange.

3. Mélange selon la revendication 1 ou 2, **caractérisé en ce qu'**il consiste en ledit OO-tert-butyl-O-(2-éthylhexyl) monoperoxycarbonate et ledit OO-tert-amyl-O-2-éthyl hexyl monoperoxycarbonate.

4. Composition réticulable comprenant au moins un copolymère éthylène-acétate de vinyle (EVA), **caractérisée en ce que** ladite composition comprend en outre un mélange selon la revendication 1 ou 2.

5. Composition réticulable selon la revendication 4, **caractérisée en ce que** ledit copolymère éthylène-acétate de vinyle (EVA) est présent dans ladite composition à une teneur allant de 85 à 99,5%, de préférence de 97 à 99%, en poids, par rapport au poids de la composition.

6. Composition réticulable selon la revendication 4 ou 5, **caractérisée en ce que** ledit mélange est présent dans ladite composition à une teneur allant de 0,5 à 5%, de préférence de 1 à 3%, en poids, par rapport au poids de la composition.

7. Composition réticulable selon l'une des revendications 4 à 6, **caractérisée en ce qu'**elle comprend en outre au moins un agent anti-oxydant.

8. Composition réticulable selon la revendication précédente, **caractérisée en ce que** ledit agent anti-oxydant est présent dans ladite composition à une teneur allant de 0,1 à 3%, en poids, par rapport au poids de la composition.

9. Procédé de réticulation d'une composition comprenant au moins un EVA copolymère éthylène-acétate de vinyle, comprenant au moins l'étape de faire réagir ledit EVA copolymère éthylène-acétate de vinyle avec un mélange selon l'une des revendications 1 à 3.

10. Utilisation d'un mélange selon l'une quelconque des revendications 1 à 3 pour augmenter la vitesse de réticulation dans un procédé de réticulation de copolymère d'éthylène-acétate de vinyle (EVA).

11. Procédé de fabrication d'un film **caractérisé en ce qu'**il comprend au moins les étapes suivantes :
- a°) extrusion sous forme de film d'une composition réticulable selon l'une quelconque des revendications 4 à 8,
- b°) réticulation de ladite composition réticulable pendant ou après ladite étape a°) d'extrusion.

## Claims

1. Mixture comprising at least O,O-tert-butyl-O-(2-ethylhexyl) monoperoxycarbonate and at least 0,0-tert-amyl-O-2-ethylhexyl monoperoxycarbonate, **characterized in that** the said O,O-tert-amyl-O-2-ethylhexyl monoperoxycarbonate is present in the mixture in a content ranging from 0.001% to 45% by weight relative to the total weight of the mixture.

2. Mixture according to Claim 1, **characterized in that** the said content ranges from 10% to 35% and preferably from 15% to 30% by weight relative to the total weight of the mixture.

3. Mixture according to Claim 1 or 2, **characterized in that** it consists of the said O,O-tert-butyl-O-(2-ethylhexyl) monoperoxycarbonate and the said 0,0-tert-amyl-O-2-ethylhexyl monoperoxycarbonate.

4. Crosslinkable composition comprising at least one ethylene-vinyl acetate (EVA) copolymer, **characterized in that** the said composition also comprises a mixture according to Claim 1 or 2.

5. Crosslinkable composition according to Claim 4, **characterized in that** the said ethylene-vinyl acetate (EVA) copolymer is present in the said composition in a content ranging from 85% to 99.5% and preferably from 97% to 99% by weight relative to the weight of the composition.

6. Crosslinkable composition according to Claim 4 or 5, **characterized in that** the said mixture is present in the said composition in a content ranging from 0.5% to 5% and preferably from 1% to 3% by weight relative to the weight of the composition.

7. Crosslinkable composition according to one of Claims 4 to 6, **characterized in that** it also comprises at least one antioxidant.

8. Crosslinkable composition according to the preceding claim, **characterized in that** the said antioxidant is present in the said composition in a content ranging from 0.1% to 3% by weight relative to the weight of the composition.

9. Process for crosslinking a composition comprising at least one ethylene-vinyl acetate EVA copolymer, comprising at least the step of reacting the said ethylene-vinyl acetate EVA copolymer with a mixture according to one of Claims 1 to 3.

10. Use of a mixture according to one of Claims 1 to 3, for increasing the rate of crosslinking in a process for crosslinking an ethylene-vinyl acetate (EVA) copolymer.

11. Process for manufacturing a film, **characterized in that** it comprises at least the following steps:
- a) extrusion in the form of a film of a crosslinkable composition according to any one of Claims 4 to 8,
- b) crosslinking of the said crosslinkable composition during or after the said extrusion step a).

## Patentansprüche

1. Mischung, umfassend mindestens 0,0-tert.-Butyl-0-(2-ethylhexyl)monoperoxycarbonat und mindestens O,O-tert.-Amyl-O-2-ethylhexylmonoperoxycarbonat, **dadurch gekennzeichnet, dass** das 0,0-tert.-Amyl-0-2-ethylhexylmonoperoxycarbonat in der Mischung in einem Gehalt im Bereich von 0,001 bis 45 Gew.-%, bezogen auf das Gesamtgewicht der Mischung, vorliegt.

2. Mischung nach Anspruch 1, **dadurch gekennzeichnet, dass** der Gehalt im Bereich von 10 bis 35 Gew.-%, vorzugsweise 15 bis 30 Gew.-%, bezogen auf das Gesamtgewicht der Mischung, vorliegt.

3. Mischung nach Anspruch 1 oder 2, **dadurch gekennzeichnet, dass** sie aus dem 0,0-tert.-Butyl-0-(2-ethylhexyl)monoperoxycarbonat und dem 0,0-tert.-Amyl-0-2-ethylhexylmonoperoxycarbonat besteht.

4. Vernetzbare Zusammensetzung, umfassend mindestens ein Ethylen-Vinylacetat-Copolymer (EVA-Copolymer), **dadurch gekennzeichnet, dass** die Zusammensetzung außerdem eine Mischung nach Anspruch 1 oder 2 umfasst.

5. Vernetzbare Zusammensetzung nach Anspruch 4, **dadurch gekennzeichnet, dass** das Ethylen-Vinylacetat-Copolymer (EVA-Copolymer) in der Zusammensetzung in einem Gehalt im Bereich von 85 bis 99,5 Gew.-%, vorzugsweise 97 bis 99 Gew.-%, bezogen auf das Gewicht der Zusammensetzung, vorliegt.

6. Vernetzbare Zusammensetzung nach Anspruch 4 oder 5, **dadurch gekennzeichnet, dass** die Mischung in der Zusammensetzung in einem Gehalt im Bereich von 0,5 bis 5 Gew.-%, vorzugsweise 1 bis 3 Gew.-%, bezogen auf das Gewicht der Zusammensetzung, vorliegt.

7. Vernetzbare Zusammensetzung nach einem der Ansprüche 4 bis 6, **dadurch gekennzeichnet, dass** sie außerdem mindestens ein Antioxidans umfasst.

8. Vernetzbare Zusammensetzung nach dem vorhergehenden Anspruch, **dadurch gekennzeichnet, dass** das Antioxidans in der Zusammensetzung in einem Gehalt im Bereich von 0,1 bis 3 Gew.-%, bezogen auf das Gewicht der Zusammensetzung, vorliegt.

9. Verfahren zur Vernetzung einer Zusammensetzung, die mindestens ein Ethylen-Vinylacetat-EVA-Copolymer umfasst, bei dem man das Ethylen-Vinylacetat-EVA-Copolymer mit einer Mischung nach einem der Ansprüche 1 bis 3 umsetzt.

10. Verwendung einer Mischung nach einem der Ansprüche 1 bis 3 zur Erhöhung der Vernetzungsgeschwindigkeit bei einem Verfahren zur Vernetzung eines Ethylen-Vinylacetat-Copolymers (EVA-Copolymers).

11. Verfahren zur Herstellung einer Folie, **dadurch gekennzeichnet, dass** es mindestens die folgenden Schritte umfasst:
- a°) Extrudieren einer vernetzbaren Zusammensetzung nach einem der Ansprüche 4 bis 8 in Folienform,
- b°) Vernetzen der vernetzbaren Zusammensetzung während oder nach dem Extrusionsschritt a°).
